(19) Europäisches Patentamt
European Patent Office
Office européen des brevets

(11) **EP 2 460 244 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(51) Int Cl.:
***H02J 3/01*** *(2006.01)*      ***H02J 3/18*** *(2006.01)*
***H02J 3/24*** *(2006.01)*

(21) Anmeldenummer: **10732940.1**

(22) Anmeldetag: **13.07.2010**

(86) Internationale Anmeldenummer:
**PCT/EP2010/060008**

(87) Internationale Veröffentlichungsnummer:
**WO 2011/012436 (03.02.2011 Gazette 2011/05)**

(54) **VORRICHTUNG ZUR KOMPENSATION VON IN STROMVERLÄUFEN AUFTRETENDEN OBERSCHWINGUNGEN IN EINEM HOCHSPANNUNGSNETZ**

DEVICE FOR COMPENSATING HARMONICS OCCURRING IN CURRENT FLOWS IN A HIGH-VOLTAGE NETWORK

DISPOSITIF DE COMPENSATION DES OSCILLATIONS HARMONIQUES SE PRODUISANT SUR LES CHEMINS DE COURANT D'UN RÉSEAU À HAUTE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.07.2009 DE 102009036002**

(43) Veröffentlichungstag der Anmeldung:
**06.06.2012 Patentblatt 2012/23**

(73) Patentinhaber: **Siemens Aktiengesellschaft
80333 München (DE)**

(72) Erfinder: **PIESCHEL, Martin
90473 Nürnberg (DE)**

(56) Entgegenhaltungen:
EP-A2- 1 560 312      DE-A1- 19 738 125
US-A- 5 751 138      US-A- 5 757 099
US-A1- 2003 169 109      US-A1- 2006 044 850

- **RASTOGI M ET AL: "HYBRID-ACTIVE FILTERING OF HARMONIC CURRENTS IN POWER SYSTEMS", IEEE TRANSACTIONS ON POWER DELIVERY, IEEE SERVICE CENTER, NEW YORK, NY, US, Bd. 10, Nr. 4, 1. Oktober 1995 (1995-10-01), Seiten 1994-2000, XP000558235, ISSN: 0885-8977, DOI: 10.1109/61.473352**
- **AKAGI H ED - EUROPEAN POWER ELECTRONICS AND DRIVES ASSOCIATION: "NEW TRENDS IN ACTIVE FILTERS", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, Bd. O, 19. September 1995 (1995-09-19), Seiten 17-26, XP000537486,**

**Beschreibung**

Die Erfindung betrifft eine Vorrichtung zur Kompensation von in Stromverläufen auftretenden Oberschwingungen in einem Hochspannungsnetz mit einem passiven Filter und einer steuerbaren Spannungsquelle, die miteinander in Reihe geschaltet und mit dem Hochspannungsnetz in Parallelschaltung verbindbar ist, einem Anschlussspannungssensor zum Erfassen einer an der Vorrichtung gegenüber dem Erdpotential abfallenden Anschlussspannung, einer Regelungseinheit, die in Abhängigkeit einer zu kompensierenden Oberschwingung eine Reglerstellspannungsgröße $u_{h,m}$ berechnet, und einer mit der Regelungseinheit verbundenen Ansteuerung, die in Abhängigkeit einer von der Regelungseinheit ausgangsseitig bereitgestellten Stellspannungsgröße $u_h$ Ansteuersignale für die steuerbare Spannungsquelle erzeugt, so dass die steuerbare Spannungsquelle eine Stellspannung $u_H$ bereitstellt, die einen Filterstrom zum Unterdrücken der erfassten Oberschwingung treibt.

Die Erfindung betrifft ferner ein Verfahren zur Kompensation von in Stromverläufen auftretenden Oberschwingungen in einem Hochspannungsnetz mittels einer Vorrichtung, die ein passives Filter und eine steuerbaren Spannungsquelle aufweist, die miteinander in Reihe geschaltet und in Parallelschaltung mit dem Hochspannungsnetz verbunden sind, bei dem ein die unerwünschte Oberschwingung enthaltender Laststrom ermittelt und in Abhängigkeit der ermittelten Oberschwingung eine Stellspannungsgröße berechnet wird, wobei die steuerbare Spannungsquelle in Abhängigkeit der Stellspannungsgröße angesteuert wird, so dass diese eine Stellspannung erzeugt, die einen Filterstrom treibt, der sich mit der Oberschwingung des Laststromes so überlagert, dass die Oberschwingung ausgelöscht wird.

Eine solche Vorrichtung und ein solches Verfahren sind beispielsweise aus der DE 197 38 125 bekannt. Die dort beschriebene Vorrichtung und das dort beschriebene Verfahren dienen zur Kompensation von im Netz auftretenden Netzspannungsverzerrungen, wobei die besagte Vorrichtung eine Reihenschaltung aus einem aktiven Filter und einer Spannungsquelle aufweist, die einer Last parallel geschaltet ist. Ferner ist eine Regelungseinheit offenbart, die eingangsseitig mit einem Netzspannungsraumzeiger, einem Filterstromraumzweigzeiger und einem Zwischenkreisspannungsistwert versorgt wird, der ein Maß für die im Gleichspannungszwischenkreis der steuerbaren Spannungsquelle gespeicherten Energie darstellt.

Aus dem Beitrag von Rastogi, M. et al. "Hybrid-Active Filtering of Harmonic Currents in Power Systems", IEEE Transactions on Power Delivery, IEEE Service Center, New York, US, Bd. 10, Nr. 4 vom 01.10.1995 auf den Seiten 1994 bis 2000 ist eine Vorrichtung bekannt, die zur Kompensation von in Stromverläufen auftretenden Oberschwingungen in einem Hochspannungsnetz eingerichtet ist. Die dort beschriebene Vorrichtung weist eine Reihenschaltung einer Filternetzwerk und einer Wicklung eines Transformators auf. Diese Reihenschaltung ist einer Last parallel geschaltet. Die Kondensatorwicklung ist mit einer Sekundärwicklung induktiv gekoppelt, die wechselspannungsseitig an einen Umrichter angeschlossen ist, der über einen Gleichspannungszwischenkreis mit einem weiteren Umrichter verbunden ist, der mit einem weiteren Wechselspannungsnetz gekoppelt ist. Der Filternetzwerk umfasst mehrere einander parallel geschaltete passive Filter. Die auf diese Weise bereitgestellte Vorrichtung kann als eine Reihenschaltung, bestehend aus einem Filternetzwerk sowie einer steuerbaren Stromquelle, betrachtet werden. Bei der Regelung der Stromspannungsquelle wird die Impedanz des Filternetzwerks abgeschätzt und der Schätzwert mit Hilfe ein rekursives mathematisches Verfahren an Messungen angepasst.

Aus der DE 102 44 056 B3 ist ein Verfahren zum Erzeugen eines Satzes von Steuersignalen für einen Umrichter eines aktiven Filters zur Kompensation von Oberschwingungen beschrieben. In einem ersten Schritt wird gemäß dem vorbekannten Verfahren der Strom, welcher die zu kompensierende Oberschwingung umfasst, gemessen. Das gemessene analoge Stromsignal wird anschließend digitalisiert. Dann wird der Grundschwingungsanteil aus dem Messstrom entfernt. Auf die gefilterten Strommesswerte wird eine transformierte Regelfunktion des PI-Reglers angewandt. Die Ausgangsgrößen der verwendeten PI-Regler werden anschließend aufsummiert, wobei die Summe als Sollstromwert an eine Regeleinheit zum Regeln einer steuerbaren Spannungsquelle in Form eines IGBT-Umrichters übertragen wird.

Weitere Regelungsverfahren sind in der DE 10 2004 019 518 A1 und in der WO99/67868 A3 beschrieben.

Die eingangs genannte Vorrichtung und das eingangs genannte Verfahren weisen den Nachteil auf, dass äußere Einflüsse wie beispielsweise ein von dem angeschlossenen Wechselspannungsnetz eingeprägter Filterstrom oder aber der Einfluss weiterer parallel angeordneter passiver Filter auf die Regelung nur unter hohem Rechenaufwand berücksichtigt werden können.

Aufgabe der Erfindung ist es daher, eine Vorrichtung und Verfahren der eingangs genannten Art bereitzustellen, die eine stabile hochdynamische Regelung der Oberschwingungskompensation ermöglichen.

Ausgehend von der eingangs genannten Vorrichtung löst die Erfindung diese Aufgabe dadurch, dass die Regelungseinheit einen Signalfilter zum Entfernen eines netzfrequenten Anteils aus der Anschlussspannung und Additionsmittel aufweist, die zum Addieren der gefilterten Anschlussspannung und der Reglerstellspannungsgröße unter Erhalt der Stellspannungsgröße $U_h$ eingerichtet ist, wobei Stromgebermittel zum Bereitstellen von Laststrommesswerten und Filterstrommesswerten vorgesehen sind und die Regelungseinheit zum Bereitstellen der Reglerstellspannungsgröße ein Zustandsregler aufweist, der nach einem auf der Reglerstellspannungsgröße $U_{h,m}$ und den Filterstrommesswerten basierenden Modell der dynamischen Eigenschaften des passiven Filters ausgelegt wurde.

Ausgehend von dem eingangs genannten Verfahren löst die Erfindung diese Aufgabe dadurch, dass eine an der Vorrichtung gegenüber dem Erdpotential abfallende Anschlussspannung $u_{AF}$ erfasst wird, ein netzfrequenter Anteil der Anschlussspannung aus der erfassten Anschlussspannung mittels eines Signalfilters unter Gewinnung einer gefilterten Anschlussspannung $u_{AF,f}$ entfernt wird und die Berechnung der Stellspannungsgröße $u_h$ unter Berücksichtigung der gefilterten Anschlussspannung $u_{AF,f}$ erfolgt.

Erfindungsgemäß ist eine Vorsteuerung bereitgestellt, mit der die Einflüsse einer sich ändernden Impedanz des angeschlossenen Wechselspannungsnetzes sowie der Einfluss möglicherweise vorhandener paralleler passiver Filter nahezu komplett ausgeblendet werden können. Das Übertragungsverhalten des passiven Filters, über das die Steuerspannungsquelle mit dem Wechselspannungsnetz verbunden ist, ändert sich auf Grund der Vorsteuerung nicht. Die Regelparameter können somit auf das passive Filter ausgelegt werden, ohne dass Stabilitätsprobleme auftreten. Für Hoch- und Höchstspannungsnetze ist eine direkte Vorsteuerung der Anschlussspannung derzeit technisch nicht realisierbar. Die derzeitig marktüblichen Umrichter weisen keine ausreichend hohe Stellspannung auf. Erfindungsgemäß wird daher die am Anschlusspunkt des passiven Filters an das Wechselspannungsnetz die gegenüber dem Erdpotential abfallende Anschlussspannung erfasst und gefiltert, so dass der netzfrequente Anteil, also der Anteil der Anschlussspannung, der mit der Grundschwingung der Netzfrequenz schwingt, entfernt ist. Nur die gefilterte Anschlussspannung wird zur Vorsteuerung eingesetzt.

Zum Durchführen der Regelung dient die Regelungseinheit, welche zweckmäßigerweise einen so genannten FPGA Field Programmable Gate Array als rekonfigurierbaren Logikbaustein aufweist. Selbstverständlich sind auch andere Logikbausteine einsetzbar. Neben der Berechnung der aktiven Stellspannung übernimmt die Regelungseinheit auch die Stabilisierung der Kondensatorspannung der steuerbaren Spannungsquelle, worauf im Folgenden noch eingegangen werden wird.

Erfindungsgemäß sind Stromgebermittel zum Bereitstellen von Laststrommesswerten $i_{Last}$ und Filterstrommesswerten $i_{AF}$ vorgesehen. Die Stromgebermittel sind beispielsweise geeichte Stromsensoren, die analoge Messwerte bereitstellen. Die Messwerte werden zweckmäßigerweise unter Gewinnung von Abtastwerten abgetastet und die Abtastwerte anschließend digitalisiert, wodurch digitale Laststrommesswerte bzw. Filterstrommesswerte bereitgestellt sind. Abweichend hiervon berechnen die Stromgebermittel die Laststrommesswerte bzw. Filterstrommesswerte anhand anderer Messwerte. Auch Schätzungen, die selbstverständlich auf Messwerten basieren, sind im Rahmen der Erfindung möglich.

Erfindungsgemäß weist die Regelungseinheit zum Berechnen der Reglerstellspannungsgröße $u_{h,m}$ einen Zustandsregler auf, der nach einem Modell der dynamischen Eigenschaften des passiven Filters ausgelegt wurde, auf. Vorteilhafterweise sind Korrekturmittel zum Ausgleich von Amplituden- und Phasenveränderungen vorgesehen, die durch die Regelstrecke verursacht sind. Die Korrekturmittel umfassen beispielsweise eine zweckmäßige Matrix, mit welcher Phasendrehungen und Amplitudenveränderungen, die durch die Regelstrecke verursacht werden, berücksichtigt werden können. Hierzu werden die Parameter, welche die Sollgröße beschreiben, durch die Matrixoperation zweckmäßigerweise so verändert, dass der in das Netz eingeprägte Filterstrom die gewünschte Phasenlage und Amplitude aufweist.

Vorteilhafterweise ist der Signalfilter ein Hochpass, ein Keilfilter oder eine Bandsperre. Der Signalfilter kann zudem entweder als zweckmäßige Schaltung, also als Hardware oder aber auch als digitaler Filter, in Form von Software vorliegen. Vorteilhafterweise ist der Signalfilter eine Bandsperre. Bandsperren sind dem Fachmann auf diesem Gebiet bestens bekannt, so dass hierauf nicht detailliert eingegangen zu werden braucht.

Gemäß einer diesbezüglich zweckmäßigen Weiterentwicklung ist ein Laststromfilter und/oder einen Filterstromfilter zum Herausfiltern eines netzfrequenten Anteils aus den Laststrommesswerten $i_{Last}$ bzw. den Filterstrommesswerten $i_{AF}$ vorgesehen. Unter dem Begriff netzfrequenter Anteil ist im Rahmen der Erfindung der Anteil eines Signals zu verstehen, der die Grundfrequenz der Netzspannung des angeschlossenen Wechselspannungsnetzes aufweist. Diese beträgt beispielsweise 50 Hz oder 60 Hz. Mit anderen Worten ist der netzfrequente Anteil der Grundschwingungsanteil des jeweiligen Messsignals.

Vorteilhafterweise ist die steuerbare Spannungsquelle ein Umrichter, der über abschaltbare Leistungshalbleiter verfügt. Jedem abschaltbaren Leistungshalbleiter ist eine Freilaufdiode gegensinnig parallel geschaltet. Gemäß einer bevorzugten Ausgestaltung ist hier der Umrichter ein selbstgeführter mehrstufiger Umrichter. Solche Umrichter sind auch als so genannte Multilevelumrichter bekannt. Sie weisen eine Reihenschaltung aus bipolaren Submodulen auf, welche die Phasenmodulzweige ausbilden. Die Phasenmodulzweige sind mit einer Phase des angeschlossenen Wechselspannungsnetzes verbunden, wobei der passive Filter zwischengeschaltet ist. Darüber hinaus sind die Stromrichterventile miteinander in Dreieck- oder Sternschaltung verbunden. Jedes bipolare Submodul weist zweckmäßigerweise einen Kondensator sowie eine Leistungshalbleiterschaltung auf. Die Leistungshalbleiterschaltung ist beispielsweise eine so genannte H-Brücken-schaltung, so dass an den Ausgangsklemmen eines jeden Submoduls entweder die an dem Energiespeicher abfallende Kondensatorspannung, eine Nullspannung oder aber die inverse Kondensatorspannung erzeugbar ist. Mit einem solchen mehrstufigen Umrichter können somit eine Vielzahl von Spannungsstufen erzeugt werden.

Gemäß einer bevorzugten Ausgestaltung des erfindungsgemäßen Verfahrens wird die gefilterte Anschlussspannung $u_{AF,f}$ zu der Reglerstellspannungsgröße $u_{h,m}$ hinzuaddiert, wobei die Reglerstellspannungsgröße $u_{h,m}$ auf der Grundlage eines Modells des passiven Filters berechnet wird.

Die dynamischen Eigenschaften des passiven Filters werden zweckmäßigerweise ausgehend von einem Ist-Zustand des passiven Filters $\underline{x}_k$ modelliert. Der Ist-Zustand des passiven Filters $\underline{x}_k$ wird beispielsweise durch an Kondensatoren des passiven Filters abfallende Spannungen und durch die durch Induktivitäten des passiven Filters fließende Ströme beschrieben. Die besagten Ströme und/oder Spannungen können entweder direkt gemessen oder aber aufgrund von anderen Messwerten berechnet oder geschätzt werden. Somit sind die Regelung und der Aufwand des erfindungsgemäßen Verfahrens noch weiter vereinfacht.

Das dynamische Verhalten des passiven Filters wird zweckmäßigerweise diskret zu konstanten Abtastzeitpunkten mit Hilfe von Transformationsmatrizen modelliert. Das hierbei zugrunde liegende Modell ist somit ein zeitdiskretes Modell, so dass die üblicherweise zu berechnenden dynamischen Eigenschaften verwendeten Differenzialgleichungen als Differenzengleichungen ausgedrückt werden können. Dies hat den Vorteil, dass auch numerische Lösungsverfahren zur Modellierung eingesetzt werden können. Die Berechung kann vor der Reglerimplementierung durchgeführt werden. Die Kompensationszeit der Regelung liegt im Bereich weniger Millisekunden.

Zweckmäßigerweise wird die Reglerstellspannungsgröße $u_{h,m}$ gemäß der Formel

$$ u_{h,m} = \underline{V} \begin{bmatrix} x_d \\ \dot{x}_d \end{bmatrix}_k - \underline{K} \begin{bmatrix} i_{AF} \\ u_C \end{bmatrix}_k $$

berechnet, wobei V eine Rotations- und Skalierungsmatrix und K eine Verstärkungsmatrix ist.

Wie bereits weiter oben ausgeführt wurde, ist der Signalfilter zweckmäßigerweise ein Hochpass, ein Keilfilter oder eine Bandsperre, wobei der Signalfilter als Hardware oder als Software realisiert sein kann.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleiche Figurenverweisen und wobei

Figur 1 ein Ausführungsbeispiel der erfindungsgemäßen Vorrichtung schematisch verdeutlicht,

Figur 2 die steuerbare Spannungsquelle der Vorrichtung gemäß Figur 1 schematisch zeigt,

Figur 3 die Grundstruktur der Regelung schematisch darstellt,

Figur 4 eine weitere schematische Darstellung zum Verständnis der Regelungseinheit zeigt und

Figur 5 ein Teil der Regelungseinheit genauer schematisch verdeutlicht.

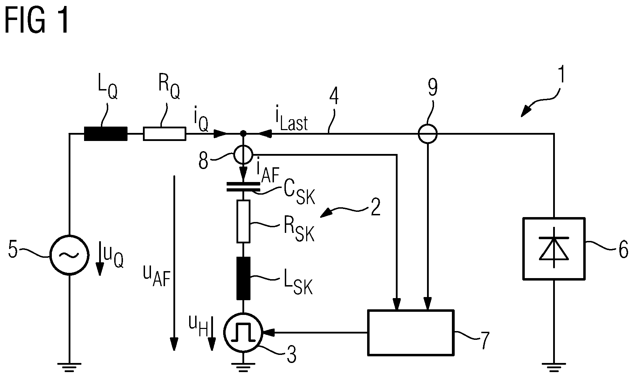

Figur 1 zeigt ein Ausführungsbeispiel der erfindungsgemäßen Vorrichtung 1, die aus einer Reihenschaltung eines passiven Filters 2 sowie einer steuerbaren Spannungsquelle 3 besteht, die auch als aktives Filter bezeichnet werden kann. Das passive Filter 2 verfügt über einen Kondensator $C_{SK}$, eine Induktivität $L_{SK}$ sowie über einen ohmschen Widerstand $R_{SK}$. Die Vorrichtung 1 ist in Parallelschaltungen mit einem Wechselspannungsnetz 4 verbunden. Das Wechselspannungsnetz 4 verfügt über eine Spannungsquelle 5, an der die Hochspannung $u_Q$ abfällt, so dass ein Laststrom $i_{Last}$ entsteht. Das Wechselspannungsnetz 4 weist die Induktivität $L_q$ sowie den ohmschen Widerstand $R_q$ auf. Das Wechselspannungsnetz 4 dient zur Versorgung verschiedener nichtlinearer Lasten 6. Durch das nichtlineare Verhalten erzeugen die Lasten Oberschwingungen. Die Netzspannung $u_Q$ treibt einen Netzstrom $i_Q$. Die Oberschwingungen sollen durch die Vorrichtung 1 kompensiert werden. Hierzu erzeugt die steuerbare Spannungsquelle 3 eine Stellspannung $u_H$, die einen Filterstrom $i_{AF}$ treibt, der über das passive Filter 2 fließt. Dabei ist die Stellspannung $u_H$ so gewählt, dass sich der Filterstrom $i_{AF}$ so mit Oberschwingung überlagert, dass die Oberschwingung ausgelöscht wird. Zur Regelung der steuerbaren Spannungsquelle 3 dient eine Regelungseinrichtung 7, die mit schematisch dargestellten Strommesssensoren 8, 9 zum Bereitstellen der Filterstrommesswerte $i_{AF}$ sowie über zum Bereitstellen von Laststromwerte $i_{Last}$ eingerichtet ist. Ferner ist ein figürlich nicht dargestellter Spannungssensor zum Erfassen einer Anschlussspannung $u_{AF}$ vorgesehen, die am Verbindungspunkt der Vorrichtung 1 mit dem Hochspannungsnetz 4 gegenüber dem Erdpotential abfällt.

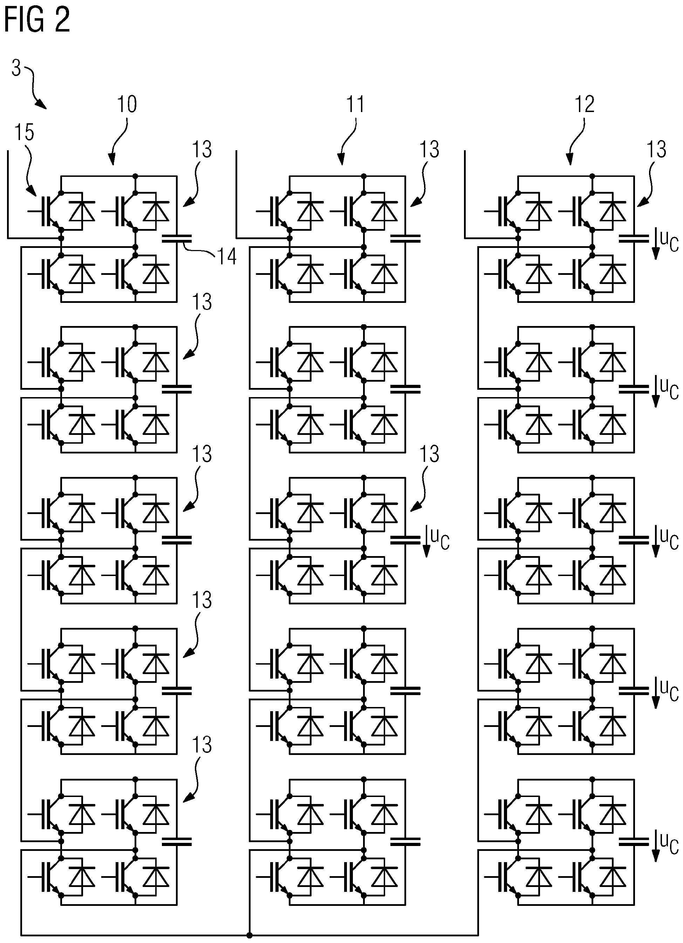

Figur 2 zeigt den Aufbau der steuerbaren Spannungsquelle 3 genauer. Es ist erkennbar, dass die steuerbare Spannungsquelle 3 aus drei Phasenmodulzweigen 10, 11, 12 besteht, wobei jeder Phasenmodulzweig 10, 11, 12 eine Reihenschaltung aus bipolaren Submodulen 13 aufweist. Jedes bipolare Submodul 13 verfügt über einen Kondensator 14 sowie über eine Leistungshalbleiterschaltung 15, die mit dem Kondensator 14 zu einer so genannten Vollbrückenschaltung oder H-Schaltung verschaltet ist. Mit anderen Worten umfasst die Leistungshalbleiterschaltung vier abschaltbare Leistungshalbleiter, denen jeweils eine Freilaufdiode parallel geschaltet ist, so dass an den Ausgangsklemmen eines jeden Submoduls entweder die an dem Kondensator 14 abfallende Kondensatorspannung $u_c$, eine Nullspannung oder aber eine inverse Kondensatorspannung $-u_c$

erzeugbar ist. Abschaltbare Leistungshalbleiter sind beispielsweise IGBTs, GTOs oder dergleichen.

Die Phasenmodulzweige 10, 11, 12 sind einerseits über das passive Filter 2 mit jeweils einer Phase des Wechselspannungsnetzes 4 verbunden. Andererseits sind die Phasenmodulzweige 10, 11, 12 in Sternschaltung miteinander verbunden. Abweichend hiervon ist es auch möglich, die Phasenmodulzweige in Dreieckschaltung miteinander zu verschalten.

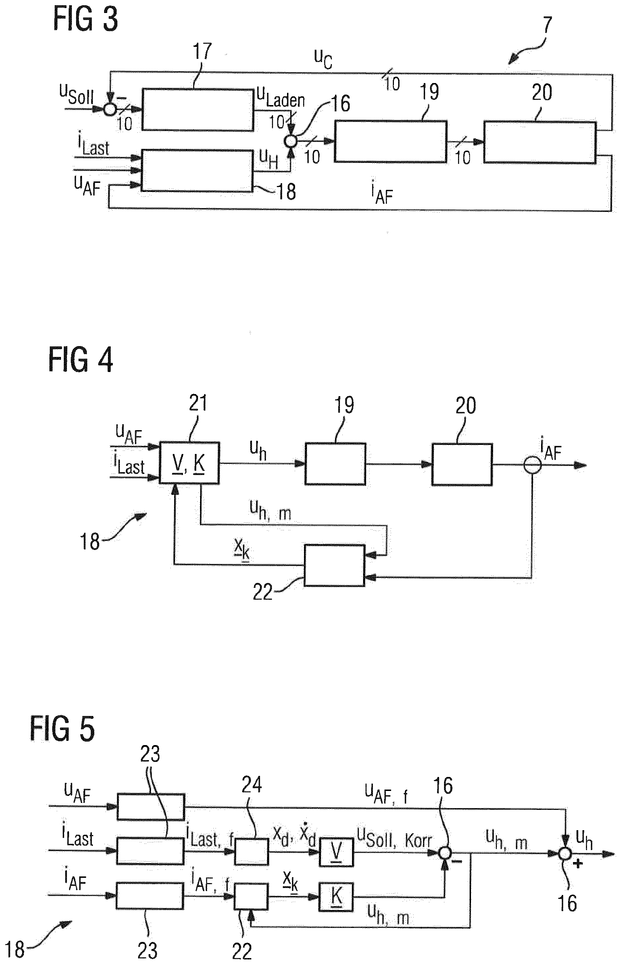

Figur 3 zeigt schematisch den Grundaufbau der Regelungseinrichtung 7, wobei davon ausgegangen wird, dass insgesamt zehn Submodule 13 zu regeln sind. Die Regelungseinrichtung 7 umfasst eine Regelungseinheit 18, eine Stabilisierungseinheit 17 und eine Ansteuereinheit 19. Der oben dargestellte Teil der Regelungseinrichtung 7 dient zur Aufrechterhaltung der Kondensatorspannung $u_c$ und soll hier nur der Vollständigkeit halber erwähnt werden. Die Kondensatorspannung $u_c$ soll einem Sollwert $u_{soll}$ möglichst entsprechen. Hierzu wird eine Kondensatorspannungsdifferenz von einem Addierer 16 gebildet. Ingesamt ergeben sich zehn Spannungsdifferenzen, welche der Stabilisierungseinheit 17 zugeführt werden. Die Stabilisierungseinheit 17 berechnet Ladespannungen $u_{Laden}$, die positiv aber auch negativ sein können, wobei ausgangsseitig der Stabilisierungseinheit 17 zehn Ladespannungen $u_{Laden}$ bereitgestellt sind.

Im unteren Teil der Darstellung von Figur 3 ist dargestellt, dass die Regelungseinheit 18 aus Laststrommesswerten $i_{Last}$, den erfassten Filterstromwerten $i_{AF}$ und gemessenen Anschlussspannungswerten $u_{AF}$ eine Reglerstellspannungsgröße $u_{h,m}$ berechnet, die mit Hilfe einer weiteren Addiereinheit 16 den Ladespannungen $u_{Laden}$ hinzuaddiert wird. Die addierten Größen werden einer Ansteuereinheit 19 eingangsseitig zugeleitet, die ein entsprechendes Pulsmuster für die steuerbare Spannungsquelle der Regelstrecke 20 erzeugt. Daraufhin fällt an der Steuerspannungsquelle 3 die gewünschte Stellspannung $u_H$ ab.

Figur 4 zeigt eine gegenüber Figur 3 genauere Darstellung eines Teils der Regelung, die mit Hilfe der Regelungseinrichtung 7 durchgeführt wird. Hierbei wurden die aufsummierten Ladespannungen $u_{Laden}$ aus Gründen der Übersicht fortgelassen. Es ist erkennbar, dass die Regelungseinheit 18 über eine Zentraleinheit 21 sowie über eine Beobachtungseinheit 22 verfügt. Die Beobachtungseinheit 22 ist eingangsseitig mit Stromgebemitteln verbunden, die ausgangsseitig Filterstrommesswerte $i_{AF}$ bereitstellen. Als zweites Eingangssignal erhält die Beobachtungseinheit 22 eine Reglerstellspannungsgröße $u_{h,m}$ die von der Zentraleinheit 21 berechnet und an deren Ausgang bereitgestellt ist. Auf der Grundlage des Filterstromes $i_{AF}$ und der Reglerstellspannungsgröße $u_{h,m}$ schätzt die Beobachtungseinheit 22 den Ist-Zustand des passiven Filters 2 und stellt einen Zustandsvektor $\underline{x}_k$ im Abtastzeitpunkt $k$ bereit, welcher der Zentraleinheit 21 eingangsseitig zugeführt wird. Der Zustandsvektor $\underline{x}_k$ umfasst beispielsweise den Strom durch die Spule $L_{SK}$ und den Spannungsabfall über dem Kondensator $C_{SK}$ zur Beschreibung des Zustandes des passiven Filters 2. Weiterhin wird die Zentraleinheit 21 mit dem Laststrom $i_{Last}$, welcher die zu kompensierende Oberschwingung enthält, versorgt sowie mit weiteren Eingangssignalen wie der gemessenen Anschlussspannung $u_{AF}$. Wie bereits erläutert wurde, erzeugt die Zentraleinheit 21 ausgangsseitig eine Stellspannungsgröße $u_h$, welche der Ansteuereinheit 19 zugeführt wird. Die Ansteuereinheit 19 erzeugt ein pulsweitenmoduliertes Pulsmuster, so dass an der steuerbaren Spannungsquelle 3 eine Stellspannung $u_H$ bereitgestellt ist, welche einen Filterstrom $i_{AF}$ zur Kompensation der unerwünschten Oberschwingung treibt. Im Rahmen der Erfindung, werden bestimmte Oberschwingungen ausgewählt. Es wird erfindungsgemäß daher eine Auswahl unter den Oberschwingungen getroffen.

Im Folgenden soll die fünfte Oberschwingung kompensiert werden, also eine Schwingung, welche mit der fünffachen Frequenz des Grundschwingungsanteils der Spannung im Spannungsnetz 4 schwingt.

Somit enthält $i_{Last,f}$

$$i_{Last,f}(t) = R \cdot \sin(5 \cdot 100 \pi t)$$

Am Ausgang der Regelstrecke 20 kommt es jedoch zu einem Filterstrom $i_{AF}$ von

$$i_{AF}(t) = A \cdot R \cdot \sin(500 \pi t + \varphi),$$

wobei sich für den untersuchten Saugkreis mit $L_{SK} = 4{,}883$ mH, $R_{SK} = 0{,}854$ Ohm und $C_{SK} = 43{,}841$ μF die Parameter $A = 0{,}018$ und $\varphi = -157{,}2565°$ ergeben.

In Figur 5 ist die Struktur der Modellierungseinheit 18 noch genauer dargestellt. Zunächst werden die messtechnischen erfassten Eingangssignale $u_{AF}$, $i_{Last}$ und $i_{AF}$ mit Hilfe einer Bandsperre 23 gefiltert. Es ergibt sich eine gefilterte Anschlussspannung $u_{AF,f}$, ein gefilterter Laststrom $i_{Last,f}$ sowie ein gefilterter Filterstrom $i_{AF,f}$. Wie bereits erläutert wurde, werden aus dem gefilterten Laststrom $i_{Last,f}$ mit Hilfe eines Beobachters 24 die Zustände $x_d$ und $\dot{x}_d$ eines ungedämpften Dauerschwingers mit der Resonanzfrequenz der zu kompensierenden Oberschwingung berechnet. Diese Zustände beschreiben die Oberschwingung vollständig. Mit Hilfe eines Korrekturgliedes V werden diese Zustände $x_d$ und $\dot{x}_d$ zu einer korrigierten Sollspannung $u_{Soll, korr}$ umgerechnet. Im Ausführungsbeispiel gemäß der Figuren 4 und 5 ist die Korrektureinheit V eine Matrixeinheit, wobei die Matrix

$$\underline{V} = \frac{1}{A}\left[(\cos(-\varphi)), \frac{1}{\Omega}\sin(-\varphi)\right]$$

lautet mit $\Omega = 500\pi$. Wie bereits ausgeführt wurde, stellt die Anwendung der Matrix V auf die Zustände $x_d$ und $\dot{x}_d$ des Dauerschwingers als Ergebnis eine korrigierte Sollspannung $u_{Soll,Korr}$ bereit, die zu dem negativen Ausgang eines Zustandsreglers K mit Hilfe eines Addierers 16 hinzuaddiert wird. Insoweit kann die Anwendung der Matrix V auch als Vorsteuerung betrachtet werden.

In dem im Zusammenhang mit Figur 4 beschriebenen Beispiel wird die Matrix zu

$$\underline{V} = [-51,23582; \ 0, \ 0136734].$$

Ausgehend von dem mit Hilfe der Beobachtungseinheit 22 auf der Grundlage von $i_{AF,f}$ und $u_{AF,f}$ geschätzten Ist-Zustand des passiven Filters $x_k$ wird mit Hilfe des Zustandsreglers K das dynamischen Verhalten des passiven Filters 3 berücksichtigt. Hierzu weist der Zustandsregler K eine Matrix mit zweckmäßig bestimmten Parametern auf. Das Verfahren zum Bestimmen dieser Parameter ist dem Fachmann bekannt, so dass an dieser Stelle hierauf nicht detailliert eingegangen zu werden braucht.

Da die Reglerstellspannungsgröße $u_{h,m}$ zurückgeführt wird, bilden die Beobachtungseinheit 22, der Zustandsregler K und der Addierer 16 einen geschlossenen Regelkreis.

Zu der Reglerstellspannungsgröße $u_{h,m}$ wird die gefilterten Anschlussspannung $u_{AF,f}$ hinzuaddiert, woraus sich die Stellspannungsgröße $u_h$ ergibt. Die Stellspannungsgröße $u_h$ wird der Ansteuerungseinheit 19 zugeführt, die Ansteuerungsmuster von Steuerungssignalen für die Leistungshalbleiter der steuerbaren Spannungsquelle 3 erzeugt. An dieser fällt dann die Stellspannung $U_H$ ab. Die Stellspannung $U_H$ treibt den Filterstrom $i_{AF}$, welcher die unerwünschte Oberschwingung destruktiv überlagert.

**Patentansprüche**

1. Vorrichtung (1) zur Kompensation von in Stromverläufen auftretenden Oberschwingungen in einem Hochspannungsnetz (4) mit einem passiven Filter (2) und einer steuerbaren Spannungsquelle (3), die miteinander in Reihe geschaltet und mit dem Hochspannungsnetz (4) in Parallelschaltung verbindbar sind, einem Anschlussspannungssensor zum Erfassen einer an der Vorrichtung (1) gegenüber dem Erdpotential abfallenden Anschlussspannung ($u_{AF}$), einer Regelungseinheit (18), die in Abhängigkeit einer zu kompensierenden Oberschwingung eine Reglerstellspannungsgröße ($u_{h,m}$) berechnet, und einer mit der Regelungseinheit (18) verbundenen Ansteuerung (19), die in Abhängigkeit einer von der Regelungseinheit (18) ausgangsseitig bereitgestellten Stellspannungsgröße ($u_h$) Ansteuersignale für die steuerbare Spannungsquelle erzeugt, so dass die steuerbare Spannungsquelle (3) eine Stellspannung ($U_H$) bereitstellt, die einen Filterstrom ($i_{AF}$) zum Unterdrücken der erfassten Oberschwingung treibt,

**dadurch gekennzeichnet, dass**
die Regelungseinheit (18) einen Signalfilter (23) zum Entfernen eines netzfrequenten Anteils aus der Anschlussspannung ($u_{AF}$) und Additionsmittel (16) aufweist, die zum Addieren der gefilterten Anschlussspannung ($u_{AF,f}$) und der Reglerstellspannungsgröße ($u_{h,m}$) unter Erhalt der Stellspannungsgröße ($u_h$) eingerichtet ist, wobei Stromgebermittel zum Bereitstellen von Laststrommesswerten ($i_{Last}$) und Filterstrommesswerten ($i_{AF}$) vorgesehen sind und die Regelungseinheit (18) zum Bereitstellen der Reglerstellspannungsgröße ($u_{h,m}$) einen Zustandsregler (K) aufweist, der auf Basis der Reglerstellspannungsgröße ($u_{h,m}$) und der Filterstrommesswerte ($i_{AF}$) mit Hilfe eines Modells der dynamischen Eigenschaften des passiven Filters eine Regelung durchführt, und ein Beobachter (24) auf Basis der Laststrommesswerte ($i_{LAST}$) Zustände (xd, $\dot{x}_d$) eines ungedämpften Dauerschwingers mit der Resonanzfrequenz einer zu kompensierenden Oberschwingung berechnet und ein Korrekturmittel (V) aus diesen Zuständen eine korrigierte Sollspannung ($u_{soll,korr}$) ermittelt, welche ein Addierer (16) zu dem negativen Ausgang des Zustandsreglers (K) hinzuaddiert und dadurch die Reglerstellspannungsgröße ($u_{h,m}$) bildet.

2. Vorrichtung (1) nach Anspruch 1,
**dadurch gekennzeichnet, dass**
der Signalfilter ein Hochpass, ein Keilfilter oder eine Bandsperre (23) ist.

3. Vorrichtung (1) nach Anspruch 1 oder 2,
**dadurch gekennzeichnet, dass**
ein Laststromfilter und/oder ein Filterstromfilter (23) zum Herausfiltern eines netzfrequenten Anteils aus den Laststrommesswerten ($i_{Last}$) beziehungsweise den Filterstrommesswerten ($i_{AF}$) vorgesehen sind/ist.

4. Vorrichtung (1) nach einem der vorhergehenden Ansprüche,
**dadurch gekennzeichnet, dass**
das Korrekturmittel (V) zum Ausgleich von Amplituden- und Phasenänderungen dient, die durch die Regelstrecke (20) verursacht sind.

5. Vorrichtung (1) nach einem der vorhergehenden Ansprüche,
**dadurch gekennzeichnet, dass**
die steuerbare Spannungsquelle über einen Umrichter (3) mit abschaltbaren Leistungshalbleitern verfügt.

6. Vorrichtung (1) nach Anspruch 5,
**dadurch gekennzeichnet, dass**
der Umrichter ein selbstgeführter mehrstufiger Umrichter (3) ist.

**7.** Verfahren zur Kompensation von in Stromverläufen auftretenden Oberschwingungen in einem Hochspannungsnetz (4) mittels einer Vorrichtung (1), die ein passives Filter (2) und eine steuerbaren Spannungsquelle (3) aufweist, die miteinander in Reihe geschaltet und in Parallelschaltung mit dem Hochspannungsnetz (4) verbunden sind, bei dem ein die unerwünschte Oberschwingung enthaltender Laststrom ($i_{Last}$) ermittelt und in Abhängigkeit der ermittelten Oberschwingung eine Stellspannungsgröße ($u_h$) berechnet wird, wobei die steuerbare Spannungsquelle (3) in Abhängigkeit der Stellspannungsgröße ($u_h$) angesteuert wird, so dass diese eine Stellspannung ($U_H$) erzeugt, die einen Filterstrom ($i_{AF}$) treibt, der sich mit der Oberschwingung des Laststromes ($i_{Last}$) so überlagert, dass die Oberschwingung ausgelöscht wird,
**dadurch gekennzeichnet, dass**
eine an der Vorrichtung (1) gegenüber dem Erdpotential abfallende Anschlussspannung ($u_{AF}$) erfasst wird, ein netzfrequenter Anteil der Anschlussspannung aus der erfassten Anschlussspannung ($u_{AF}$) mittels eines Signalfilters (23) unter Gewinnung einer gefilterten Anschlussspannung ($u_{AF,f}$) entfernt wird, die Stellspannungsgröße ($u_h$) unter Berücksichtigung der gefilterten Anschlussspannung ($u_{AF,f}$) berechnet wird, die gefilterte Anschlussspannung ($u_{AF,f}$) zu einer Reglerstellspannungsgröße ($u_{h,m}$) hinzuaddiert wird, und mittels eines Zustandsreglers (K) auf Basis der Reglerstellspannungsgröße ($u_{h,m}$) und der Filterstrommesswerte ($i_{AF}$) mit Hilfe des Modells der dynamischen Eigenschaften des passiven Filters (2) eine Regelung durchgeführt wird, und auf Basis der Laststrommesswerte ($i_{LAST}$) mit Hilfe eines Beobachters (24) Zustände (xd, $x_d$) eines ungedämpften Dauerschwingers mit der Resonanzfrequenz einer zu kompensierenden Oberschwingung berechnet werden und aus diesen Zuständen eine korrigierte Sollspannung ($u_{soll,korr}$) ermittelt wird, die zu dem negativen Ausgang des Zustandsreglers (K) hinzuaddiert und dadurch die Reglerstellspannungsgröße ($u_{h,m}$) gebildet wird.

**8.** Verfahren nach Anspruch 7,
**dadurch gekennzeichnet, dass**
die dynamischen Eigenschaften des passiven Filters (2) ausgehend von einem Ist-Zustand ($\underline{x}_k$) des passiven Filters (2) modelliert werden.

**9.** Verfahren nach Anspruch 8,
**dadurch gekennzeichnet, dass**
der Ist-Zustand ($\underline{x}_k$) des passiven Filters (2) mit Hilfe von ermittelten Strömen durch Induktivitäten des passiven Filters (2) und/oder Spannungen, die über den Komponenten des passiven Filters abfallen, festgelegt wird.

**10.** Verfahren nach einem der Ansprüche 7 bis 9,

**dadurch gekennzeichnet, dass**
das dynamische Verhalten des passiven Filters (2) zeitdiskret zu konstanten Abtastzeitpunkten ($k$) mit Hilfe von Transformationsmatrizen modelliert wird.

**11.** Verfahren nach einem der Ansprüche 7 bis 10,
**dadurch gekennzeichnet, dass**
sich der modellierte Stellgrößenanteil ($u_{h,m}$) gemäß der Formel

$$u_{h,m} = \underline{V} \begin{bmatrix} x_d \\ \dot{x}_d \end{bmatrix}_k - K \begin{bmatrix} i_{AF} \\ u_C \end{bmatrix}_k$$

wobei V eine Rotations- und Skalierungsmatrix und K eine Verstärkungsmatrix sind.

**12.** Verfahren nach einem der Ansprüche 7 bis 11,
**dadurch gekennzeichnet, dass**
der Signalfilter ein Hochpass, ein Keilfilter oder eine Bandsperre (23) ist.

**Claims**

**1.** Device (1) for the compensation of harmonics that occur in current profiles in a high-voltage mains system (4) comprising a passive filter (2) and a controllable voltage source (3), which are connected in series with one another and are connectable in parallel connection to the high-voltage mains system (4), comprising a terminal voltage sensor for detecting a terminal voltage ($u_{AF}$) dropped with respect to the earth potential at the device (1), comprising a closed-loop control unit (18), which calculates a controller manipulated voltage variable ($u_{h,m}$) depending on a harmonic to be compensated for, and comprising a driving unit (19), which is connected to the closed-loop control unit (18) and which generates drive signals for the controllable voltage source depending on a manipulated voltage variable ($u_h$) provided by the closed-loop control unit (18) on the output side, such that the controllable voltage source (3) provides a manipulated voltage ($U_H$) that drives a filter current ($i_{AF}$) for suppressing the detected harmonic,
**characterized in that**
the closed-loop control unit (18) comprises a signal filter (23) for removing a mains-system-frequency component from the terminal voltage ($u_{AF}$) and addition means (16) configured for adding the filtered terminal voltage ($u_{AF,F}$) and the controller manipulated voltage variable ($u_{h,m}$) to obtain the manipulated voltage variable ($u_h$), wherein provision is made of current sensor means for providing load current measurement values ($i_{load}$) and filter current measurement values ($i_{AF}$) and the closed-loop control unit (18), for the purpose of providing the controller manipulated voltage variable ($u_{h,m}$), comprises a state controller (K), which carries out a closed-loop control on the basis of the controller manipulated voltage variable ($u_{h,m}$) and the filter current measurement values ($i_{AF}$) with the aid of a model of the dynamic properties of the passive filter, and an observer (24), on the basis of the load current measurement values ($i_{load}$), calculates states ($x_d, \dot{x}_d$), of an undamped sustained oscillator with the resonant frequency of a harmonic to be compensated for, and a correction means (V) determines from these states a corrected setpoint voltage ($u_{setpoint,corr}$), which an adder (16) adds to the negative output of the state controller (K) and thereby forms the controller manipulated voltage variable ($u_{h,m}$).

2. Device (1) according to Claim 1,
   **characterized in that**
   the signal filter is a high-pass filter, a wedge filter or a band-stop filter (23).

3. Device (1) according to Claim 1 or 2,
   **characterized in that**
   provision is made of a load current filter and/or a filter current filter (23) for filtering a mains-system-frequency component out of the load current measurement values ($i_{load}$) and/or the filter current measurement values ($i_{AF}$), respectively.

4. Device (1) according to any of the preceding claims,
   **characterized in that**
   the correction means (V) serves for compensating for amplitude and phase changes caused by the controlled system (20).

5. Device (1) according to any of the preceding claims,
   **characterized in that**
   the controllable voltage source has a converter (3) having power semiconductors that can be turned off.

6. Device (1) according to Claim 5,
   **characterized in that**
   the converter is a self-commutated multilevel converter (3) .

7. Method for the compensation of harmonics that occur in current profiles in a high-voltage mains system (4) by means of a device (1) comprising a passive filter (2) and a controllable voltage source (3), which are connected in series with one another and are connected in parallel connection to the high-voltage mains system (4), wherein a load current ($i_{load}$) containing the undesired harmonic is determined and a manipulated voltage variable ($u_h$) is calculated depending on the harmonic determined, wherein the controllable voltage source (3) is driven depending on the manipulated voltage variable ($u_h$), such that the latter generates a manipulated voltage ($u_h$) that drives a filter current ($i_{AF}$) that is superposed with the harmonic of the load current ($i_{load}$) in such a way that the harmonic is cancelled,
   **characterized in that**
   a terminal voltage ($u_{AF}$) dropped with respect to the earth potential at the device (1) is detected, a mains-system-frequency component of the terminal voltage is removed from the detected terminal voltage ($u_{AF}$) by means of a signal filter (23) to obtain a filtered terminal voltage ($u_{AF,f}$), the manipulated voltage variable ($u_h$) is calculated taking account of the filtered terminal voltage ($u_{AF,f}$), the filtered terminal voltage ($u_{AF,f}$) is added to a controller manipulated voltage variable ($u_{h,m}$), and a closed-loop control is carried out by means of a state controller (K) on the basis of the controller manipulated voltage variable ($u_{h,m}$) and the filter current measurement values ($i_{AF}$) with the aid of the model of the dynamic properties of the passive filter (2), and states ($x_d, \dot{x}_d$) of an undamped sustained oscillator with the resonant frequency of a harmonic to be compensated for are calculated on the basis of the load current measurement values ($i_{load}$) with the aid of an observer (24) and from said states a corrected setpoint voltage ($u_{setpoint,corr}$) is determined, which is added to the negative output of the state controller (K) and the controller manipulated voltage variable ($u_{h,m}$) is thereby formed.

8. Method according to Claim 7,
   **characterized in that**
   the dynamic properties of the passive filter (2) are modelled proceeding from an actual state ($\underline{x}_k$) of the passive filter (2).

9. Method according to Claim 8,
   **characterized in that**
   the actual state ($\underline{x}_k$) of the passive filter (2) is defined with the aid of determined currents through inductances of the passive filter (2) and/or voltages dropped across the components of the passive filter.

10. Method according to any of Claims 7 to 9,
    **characterized in that**
    the dynamic behaviour of the passive filter (2) is modelled in a time-discrete fashion at constant sampling instants (k), with the aid of transformation matrices.

11. Method according to any of Claims 7 to 10,
    **characterized in that**
    the modelled manipulated variable component ($u_{h,m}$) is in accordance with the formula

$$u_{h,m} = V \begin{bmatrix} x_d \\ \dot{x}_d \end{bmatrix}_k - K \begin{bmatrix} i_{AF} \\ u_C \end{bmatrix}_k$$

wherein $\underline{v}$ is a rotation and scaling matrix and K is an amplification matrix.

12. Method according to any of Claims 7 to 11, **characterized in that** the signal filter is a high-pass filter, a wedge filter or a band-stop filter (23).

## Revendications

1. Dispositif (1) de compensation des harmoniques se produisant dans des chemins de courant d'un réseau (4) à haute tension, comprenant un filtre (2) passif et une source (3) de tension réglable, sont montés en série entre eux et qui peuvent être reliés suivant un circuit en parallèle au réseau (4) de haute tension, un capteur d'une tension aux bornes pour détecter une tension ($u_{AF}$) chutant aux bornes du dispositif (1) par rapport au potentiel de terre, une unité (18) de régulation, qui calcule une grandeur ($u_{h,m}$) de tension de réglage de régleur en fonction d'un harmonique à compenser, et une commande (19), qui est reliée à l'unité (18) de régulation et qui produit des signaux de commande de la source de tension réglable en fonction d'une grandeur ($u_h$) de tension de réglage mise à disposition du côté de la sortie par l'unité (18) de régulation, de sorte que la source (3) de tension réglable mette à disposition une tension ($U_H$) de réglage, qui donne un courant ($i_{AF}$) de filtre pour supprimer l'harmonique détecté, **caractérisé en ce que** l'unité (18) de régulation a un filtre (23) de signal pour éliminer une proportion à la fréquence du réseau de la tension ($u_{AF}$) aux bornes et un moyen (16) d'addition conçu pour additionner la tension ($u_{AF,F}$) aux bornes filtrée et la grandeur ($u_{h,m}$) de tension de réglage de régleur en obtenant la grandeur ($u_h$) de tension de réglage, dans lequel il est prévu des moyens de transmetteur de courant pour mettre à disposition des valeurs ($i_{Last}$) de mesure de courant de charge et des valeurs ($i_{AF}$) de mesure de courant de filtre et l'unité (18) de régulation a, pour la mise à disposition de la grandeur ($u_{h,m}$) de tension de réglage de régleur, un régleur ($\underline{K}$) d'état, qui, sur la base de la grandeur ($u_{h,m}$) de tension de réglage de régleur et des valeurs ($i_{AF}$) de mesure de courant de filtre, effectue une régulation à l'aide d'un modèle des propriétés dynamiques du filtre passif et un observateur (24) calcule, sur la base des valeurs ($i_{LAST}$) de mesure de courant de charge, des états ($xd, x_d$) d'un oscillateur permanent non amorti à la fréquence de résonance d'un harmonique à compenser et un moyen ($\underline{V}$) de correction détermine, à partir de ces états, une tension ($u_{Soll, korr}$) de consigne corrigée, qu'un additionneur (16) additionne à la sortie négative du régleur ($\underline{K}$) d'état et forme ainsi la grandeur ($u_{h,m}$) de tension de réglage de régleur.

2. Dispositif (1) suivant la revendication 1, **caractérisé en ce que** le filtre de signal est un passe-haut, un filtre à coin ou un filtre (23) à élimination de bande.

3. Dispositif (1) suivant la revendication 1 ou 2, **caractérisé en ce que** le filtre de courant de charge et/ou un filtre (23) de courant de filtre sont/est prévu pour séparer par filtrage une proportion en fréquence du réseau des valeurs ($i_{Last}$) de mesure de courant de charge ou respectivement des valeurs ($i_{AF}$) de mesure de courant filtre.

4. Dispositif (1) suivant l'une des revendications précédentes, **caractérisé en ce que** le moyen ($\underline{V}$) de correction sert à compenser des variations d'amplitude et de phase provoquées par la section (20) de régulation.

5. Dispositif (1) suivant l'une des revendications précédentes, **caractérisé en ce que** la source de tension réglable dispose d'un convertisseur (3) à semi-conducteur de puissance pouvant être bloqué.

6. Dispositif (1) suivant la revendication 5, **caractérisé en ce que** le convertisseur est un convertisseur (3) à multi étages à autocommutation.

7. Procédé de compensation d'oscillations se produisant dans des chemins de courant d'un réseau (4) à haute tension, au moyen d'un dispositif (1), qui a un filtre (2) passif et une source (3) de tension réglable, qui sont montés en série l'un avec l'autre et qui sont reliés, suivant un circuit en parallèle, au réseau (4) de haute tension, dans lequel on détermine un courant ($i_{Last}$) de charge contenant un harmonique que l'on ne souhaite pas et, en fonction de l'harmonique déterminé, on calcule une grandeur ($u_h$) de tension de réglage, dans lequel on commande la source (3) de tension réglable en fonction de la grandeur ($u_h$) de tension de réglage, de manière à ce que celle-ci produise une tension ($U_H$) de réglage, qui donne un courant ($i_{AF}$) de filtre, qui se superpose à l'harmonique du courant ($i_{Last}$) de charge, de manière à effacer l'harmonique, **caractérisé en ce que** l'on détecte une tension ($u_{AF}$) chutant aux bornes du dispositif (1) par rapport au potentiel de terre, on élimine une proportion à la fréquence du réseau de la tension ($u_{AF}$) aux bornes détectée, au moyen d'un filtre (23) de signal, en obtenant une tension ($u_{AF,f}$) aux bornes filtrée, on calcule la grandeur ($u_h$) de tension de réglage en tenant compte de la tension ($u_{AF,f}$)

aux bornes filtrée, on additionne la tension ($u_{AF,f}$) aux bornes filtrée à une grandeur ($u_{h,m}$) de tension de réglage de régleur et, au moyen d'un régleur ($\underline{K}$) d'état, on effectue une régulation sur la base de la grandeur ($u_{h,m}$) de tension de réglage de régleur et des valeurs ($i_{AF}$) de mesure de courant de filtre, à l'aide du modèle des propriétés dynamiques du filtre (2) passif et, sur la base des valeurs ($i_{Last}$) de mesure de courant de charge, on calcule, à l'aide d'un observateur (24), des états ($xd, \dot{x}_d$) d'un oscillateur permanent non amorti à la fréquence de résonance d'une oscillation à compenser et on détermine, à partir de ces états, une tension ($u_{Soll,korr}$) de consigne corrigée que l'on ajoute à la sortie négative du régleur ($\underline{K}$) d'état et on forme ainsi la grandeur ($u_{h,m}$) de tension de réglage de régleur.

**8.** Procédé suivant la revendication 7,
**caractérisé en ce que**
l'on modélise les propriétés dynamiques du filtre (2) passif à partir d'un état ($\underline{X}_k$) réel du filtre (2) passif.

**9.** Procédé suivant la revendication 8,
**caractérisé en ce que**
l'on fixe l'état ($\underline{X}_k$) réel du filtre (2) passif à l'aide de courants déterminés par des inductances du filtre (2) passif et/ou des tensions, qui chutent aux bornes des composants du filtre passif.

**10.** Procédé suivant l'une des revendications 7 à 9,
**caractérisé en ce que**
l'on modélise le comportement dynamique du filtre (2) passif, d'une manière discrète dans le temps, à des instants (k) d'étalonnage constant à l'aide de matrices de transformation.

**11.** Procédé suivant l'une des revendications 7 à 10,
**caractérisé en ce que**
la proportion ($u_{h,m}$) de grandeur de réglage modélisée répond à la formule

$$u_{h,m} = \underline{V}\begin{bmatrix} x_d \\ \dot{x}_d \end{bmatrix}_k - K\begin{bmatrix} i_{AF} \\ u_C \end{bmatrix}_k$$

dans laquelle $\underline{V}$ est une matrice de rotation et de mise à l'échelle et *K est* une matrice d'amplification.

**12.** Procédé suivant l'une des revendications 7 à 11,
**caractérisé en ce que**
le filtre de signal est un passe-haut, un filtre à coin ou un filtre (23) à élimination de bande.

# FIG 1

## FIG 2

## FIG 3

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19738125
- DE 10244056 B3
- DE 102004019518 A1
- WO 9967868 A3

**In der Beschreibung aufgeführte Nicht-Patentliteratur**

- Hybrid-Active Filtering of Harmonic Currents in Power Systems. **RASTOGI, M. et al.** IEEE Transactions on Power Delivery. IEEE Service Center, 01. Oktober 1995, vol. 10, 1994-2000